# EUROPÄISCHE PATENTSCHRIFT

(11) **EP 3 234 640 B1**
(45) Veröffentlichungstag und Bekanntmachung des Hinweises auf die Patenterteilung: **17.07.2024**
(21) Anmeldenummer: 15780883.3
(22) Anmeldetag: 15.10.2015
(51) Int. Cl.: G01S 15/00, G01S 15/42

(54) **VERFAHREN ZUR ORTUNG EINES OBJEKTS UNTER WASSER**
METHOD FOR LOCATING A SUBMERGED OBJECT
PROCÉDÉ DE LOCALISATION D'UN OBJET SOUS L'EAU

(30) Priorität: 18.12.2014 DE 102014119026
(43) Veröffentlichungstag der Anmeldung: 25.10.2017
(73) Patentinhaber: thyssenkrupp Marine Systems GmbH, 24143 Kiel (DE); thyssenkrupp AG, 45143 Essen (DE)
(72) Erfinder: HAUSCHILDT, Peter, 24109 Melsdorf (DE)
(74) Vertreter: thyssenkrupp Intellectual Property GmbH
(86) Internationale Anmeldenummer: PCT/EP2015/073859
(87) Internationale Veröffentlichungsnummer: WO 2016/096186

(56) Entgegenhaltungen:
- EP-A1- 2 733 504
- GB-A- 2 251 351
- US-A- 4 060 790
- US-A- 5 121 366
- US-A- 5 990 822
- US-A1- 2006 083 110
- US-A1- 2006 153 006
- US-A1- 2006 202 885
- US-B1- 7 362 655
- DONDEY PHILIPPE PORTER: "DESIGN PROCEDURES FOR SUBMARINE-DEPLOYABLE BISTATIC SONAR SYSTEMS", 1 June 1984 (1984-06-01), pages 1 - 106, XP093004493, Retrieved from the Internet <URL:https://dspace.mit.edu/bitstream/handle/1721.1/15393/12515427-MIT.pdf?sequence=2> [retrieved on 20221202]
- HENRY COX: "Fundamentals of Bistatic Active Sonar", UNDERWATER ACOUSTIC DATA PROCESSING, 1 January 1989 (1989-01-01), Dordrecht, NL, pages 3 - 22, XP055030757, Retrieved from the Internet <URL:http://rd.springer.com/chapter/10.1007/978-94-009-2289-1_1> [retrieved on 20120622]

## Beschreibung

### Stand der Technik

Die vorliegende Erfindung betrifft ein Verfahren zur Ortung eines Objekts unter Wasser, wobei ein Schallsender einen Schallimpuls aussendet, der Schallimpuls an dem zu ortenden Objekt reflektiert und/oder gestreut wird und von einem örtlich von dem Schallsender entfernten Schallempfänger empfangen wird.

Derartige Verfahren werden auch als bistatische Sonarverfahren bezeichnet. Sie finden Anwendung bei der Ortung von Unterwasserzielen durch militärische Über- und Unterwasserfahrzeuge, insbesondere bei der Ortung von Unterseebooten. Bei einem solchen Verfahren zur bistatischen Sonarortung sendet ein, üblicherweise an einem Überwasserfahrzeug angeordneter, Schallsender Schallimpulse aus, welche sich ausgehend von dem Schallsender im Wasser ausbreiten. Befindet sich ein Objekt im Umfeld des Schallsenders wird der Schallimpuls von dem Objekt reflektiert.

Ein Unterseeboot, welches sich ebenfalls im Umkreis des Schallsenders befindet, kann den von dem Objekt reflektierten Schallimpuls empfangen. Hierzu ist das Unterseeboot in der Regel mit einem Schallempfänger ausgerüstet. Zur Auswertung des an dem Objekt reflektierten und durch den Schallempfänger empfangenen Schallimpulses ist es allerdings von Vorteil, genaue Kenntnis über die Position und den Zeitpunkt zu haben, an dem der Schallimpuls von dem Schallsender gesendet worden ist. Bei so genannten nicht-kooperativen Verfahren werden der Sendezeitpunkt und die Sendeposition des Schallimpulses auf Seiten des Schallempfängers geschätzt, was jedoch mit einer gewissen Ungenauigkeit des Ortungsergebnisses einhergeht. Daher besteht insbesondere bei militärischen Anwendungen, in welchen eine hohe Ortungsgenauigkeit erwünscht ist, der Bedarf, kooperative Verfahren einzusetzen, in welchen der Sendezeitpunkt und die Sendeposition dem Empfänger übermittelt wird. Die Übermittlung des Sendezeitpunkts und der Sendeposition erfolgt bei bekannten kooperativen Verfahren beispielsweise über eine zusätzliche Funkstrecke zwischen dem Überwasserfahrzeug und dem Unterwasserfahrzeug. Dies bringt allerdings den Nachteil mit sich, dass es auf Seiten des Unterwasserfahrzeugs erforderlich ist, auf Seerohrtiefe zu fahren und für den Funkempfang geeignete Vorrichtungen über die Wasseroberfläche auszubringen. Hierdurch wird das Unterseeboot seinerseits relativ leicht detektierbar.

### Offenbarung der Erfindung

Vor diesem Hintergrund ist es Aufgabe der vorliegenden Erfindung, die Detektierbarkeit des Schallempfängers zu verringern.

Gelöst wird die Aufgabe durch ein Verfahren zur Ortung eines Objekts unter Wasser gemäß Anspruch 1, wobei ein Schallsender einen Schallimpuls aussendet, der Schallimpuls an dem zu ortenden Objekt reflektiert wird und von einem örtlich von dem Schallsender entfernten Schallempfänger empfangen wird, wobei der Schallimpuls kodierte Informationen zu dem Sendezeitpunkt des Schallimpulses und der Sendeposition des Schallsenders enthält, welche von dem Schallempfänger aus dem Schallimpuls dekodiert werden, um die Position des Objekts zu ermitteln.

Bei dem erfindungsgemäßen Verfahren werden durch den Schallsender Informationen zu dem Sendezeitpunkt und zu der Position des Schallsenders im Sendezeitpunkt in den Schallimpuls kodiert und ausgesendet. Der den Schallimpuls empfangene Schallempfänger kann den empfangenen Schallimpuls dekodieren und hierdurch Informationen zu dem Sendezeitpunkt und der Sendeposition erhalten ohne dass es erforderlich ist eine zusätzliche Funk-übertragung zwischen dem Schallsender und dem Schallempfänger vorzusehen. Auf gesonderte Vorrichtungen zum Funkempfang auf Seiten des Schallempfängers sowie ein etwaiges Fahren auf Seerohrtiefe kann verzichtet werden, so dass sich die Detektierbarkeit des Schallempfängers verringert.

Es kann dabei vorteilhafterweise vorgesehen sein, dass die in den Schallimpuls kodierten Informationen verschlüsselt sind. Mittels einer als solchen bekannten Verschlüsselungstechnik kann ausgeschlossen werden, dass weitere Schallempfänger die kodierten Informationen nutzen können. Die Informationen über die Position des Schallsenders sind somit nicht für Gegenmaßnahmen verwendbar. Für die Nutzung von verschlüsselter Kodierung ist es allerdings notwendig, dass die Verschlüsselung zwischen Schallsender und Schallempfänger abgestimmt wurde. Eine derartige Abstimmung erfolgt typischerweise vor der konkreten Nutzung.

Gemäß einer bevorzugten Ausgestaltung des Verfahrens ist vorgesehen, dass der Sendezeitpunkt des Schallimpulses und die Sendeposition des Schallsenders im Sendezeitpunkt in dem einen Schallimpuls gemeinsam kodiert. Somit trägt auch bei einer Mehrzahl an Schallimpulsen jeder einzelne Schallimpuls für sich beide Informationen.

Gemäß einer bevorzugten Ausgestaltung des Verfahrens ist vorgesehen, dass der Schallempfänger den Empfangszeitpunkt des Schallsignals ermittelt. Zusätzlich kann der Schallempfänger die Empfangsrichtung ermitteln, aus welcher der Schallimpuls empfangen wird, so dass auf Seiten des Empfängers Rückschlüsse auf die Position des zu ortenden Objekts gezogen werden können. Vorteilhaft ist es, wenn der Schallempfänger richtungssensitiv ausgebildet ist, so dass die Empfangsrichtung beispielsweise gegenüber einer vorgegebenen Referenzrichtung ermittelt werden kann.

In diesem Zusammenhang hat es sich als besonders bevorzugt erwiesen, wenn der Schallempfänger anhand des Sendezeitpunkts, anhand der Sendeposition, anhand des Empfangszeitpunkts und anhand der Empfangsrichtung die Position des zu ortenden Objekts ermittelt. Bei der Ortung des Objekts können neben den unmittelbar durch den Schallsender ermittelten Informationen, nämlich dem Empfangszeitpunkt und der Empfangsrichtung, zusätzlich die in dem empfangenen Schallimpuls enthaltenen Informationen herangezogen werden. Mit den Informationen, die in dem Schallimpuls enthalten sind, kann die Laufzeit des Schallimpulses und der Ausbreitungsweg des Schallimpulses berechnet werden, so dass das Objekt geortet werden kann. Zur Ortung des Objekts ist es nicht erforderlich, zusätzlich zu dem Schallimpuls, der an dem Objekt reflektiert wird, einen weiteren Schallimpuls, beispielsweise einen auf direktem Weg zwischen dem Schallsender und dem Schallempfänger übertragenen Schallimpuls (so genanntes Direktsignal), auszuwerten. Allerdings können solche Direktsignale zusätzlich herangezogen werden, um die Ortung des Objekts zu verbessern.

Das erfindungsgemäße Verfahren ist insbesondere für solche Anwendungen geeignet, in denen der Schallsender gegenüber dem Schallempfänger bewegt wird. Schallsender und Schallempfänger können auf verschiedenen, gegeneinander bewegbaren Einheiten angeordnet sein.

Der Schallsender ist bevorzugt an einem Wasserfahrzeug angeordnet. Bei dem Wasserfahrzeug kann es sich um ein Überwasserfahrzeug, z. B. ein Schiff oder ein Boot, oder ein Unterwasserfahrzeug handeln. Es können fernsteuerbare oder autonome Über- oder Unterwasserfahrzeuge zur Anwendung kommen. Alternativ kann der Schallsender an einem unbemannten Tauch- oder Schwimmkörper, angeordnet sein, was den Vorteil mit sich bringt, dass keine Besatzungsmitglieder der Gefahr ausgesetzt werden, dass der Schallsender durch feindliche Einheiten detektiert wird. Solche Tauch- bzw. Schwimmkörper können als Boje, Bake oder als Torpedo ausgebildet sein. Alternativ kann der Schallsender am Meeresboden oder an einem Ufer befestigt sein.

Vorteilhaft ist es, wenn der Schallempfänger an einem Unterwasserfahrzeug, insbesondere einem Unterseeboot, angeordnet ist.

Eine besonders vorteilhafte Ausgestaltung des Verfahrens sieht vor, dass der Schallsender von dem Unterwasserfahrzeug, insbesondere von dem Unterseeboot, ausgebracht wird. Der Schallsender kann an einem durch das Unterwasserfahrzeug ausbringbaren Tauchkörper oder Schwimmkörper angeordnet sein, welcher an Bord des Unterwasserfahrzeugs mitgeführt wird und dann ausgebracht werden kann, wenn ein Objekt geortet werden soll. Der Tauch- oder Schwimmkörper kann beispielsweise durch eine Schleuse oder ein Waffenrohr des Unterwasserfahrzeugs ausgebracht werden. Alternativ kann das Unterwasserfahrzeug eine außerhalb eines Druckkörpers des Unterwasserfahrzeugs angeordnete Aufnahme aufweisen, in welcher der Tauch- oder Schwimmkörper aufgenommen ist und aus welchem er ausgebracht wird. Bevorzugt ist der Schallsender beim Ausbingen nicht aktiviert und wird nach einer vorgegebenen Zeitspanne aktiviert, so dass eine gewisse Distanz zwischen dem Schallsender und dem Unterwasserfahrzeug hergestellt werden kann bevor der Schallsender aktiviert wird. Hierdurch kann die Detektierbarkeit des Unterwasserfahrzeugs weiter verringert werden.

Vorteilhaft ist eine Ausgestaltung, bei welcher die Sendeposition des Schallsenders mittels eines Satellitennavigationssytems und/oder mittels eines Trägheitsnavigationssystems ermittelt wird, so dass die Position im Sendezeitpunkt auf Seiten des Schallsenders ermittelt und in den Schallimpuls kodiert werden kann.

Eine weitere vorteilhafte Ausgestaltung des erfindungsgemäßen Verfahrens sieht vor, dass mehrere Schallsender mehrere Schallimpulse aussenden, die an dem zu ortenden Objekt reflektiert werden und von dem Schallempfänger empfangen werden. Die Verwendung mehrerer Schallimpulse, die von unterschiedlichen Schallsendern stammen, ermöglicht eine noch genauere Ortung des die Schallimpulse reflektierenden Objekts. Da die von unterschiedlichen Schallsendern stammenden Schallimpulse unterschiedliche Informationen zu Sendezeitpunkt und Sendeposition enthalten, ist es auf Seiten des Schallempfängers möglich, diese zu trennen.

In diesem Zusammenhang ist es bevorzugt, wenn die Schallsender gegeneinander bewegt werden, so dass die Schallimpulse von wechselnden Richtungen aus auf das zu ortende Objekt treffen können. Hierdurch kann die Genauigkeit der Ortung nochmals erhöht werden.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den Erfindungsgedanken nicht einschränken.

### Kurze Beschreibung der Figuren

Die **Figur 1** zeigt in einer schematischen Darstellung die Ortung eines Objekts unter Wasser gemäß einem ersten Ausführungsbeispiel der Erfindung.

Die **Figur 2** zeigt in einer schematischen Darstellung die Ortung eines Objekts unter Wasser gemäß einem zweiten Ausführungsbeispiel der Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

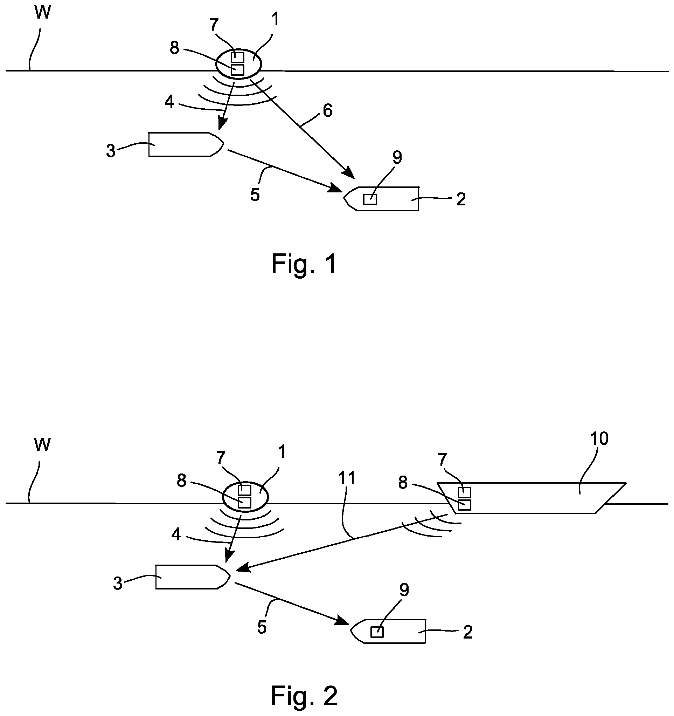

Anhand der Darstellung in **Figur 1** soll nachfolgend ein erstes Ausführungsbeispiel eines erfindungsgemäßen Verfahrens zu Ortung eines Objekts unter Wasser beschrieben werden. Bei dem Verfahren handelt es sich um ein Verfahren zur bistatischen Sonarortung, wobei ein Schallsender 8 einen Schallimpuls aussendet, der oftmals auch als Sonarping bezeichnet wird. Befindet sich ein Objekt 3 im Umfeld des Schallsenders 8, so wird der von dem Schallsender 8 ausgestrahlte Schallimpuls an dem Objekt 3 reflektiert und kann von einem Schallempfänger 9 empfangen werden, der entfernt von dem Schallsender 8 angeordnet ist. Bei der bistatischen Sonarortung ist es weder erforderlich, dass sich Schallsender 8 und Schallempfänger 9 in räumlicher Nähe zueinander befinden noch ist auf Seiten des Schallsenders 8 eine Kenntnis über den Ort des Schallempfängers 9 erforderlich.

Gemäß dem vorliegenden Beispiel ist der Schallsender 8 an Bord eines unbemannten Schwimmkörpers 1 nach Art einer Boje angeordnet. Der Schallempfänger 9 befindet sich an Bord eines militärischen Unterwasserfahrzeugs 2, welches als Unterseeboot ausgebildet ist. Das Unterwasserfahrzeug 2 weist einen Druckkörper auf, welcher druckfest ausgestaltet ist und mehrere Besatzungsmitglieder aufnehmen kann. Außerhalb des Druckkörpers ist an dem Unterwasserfahrzeug 2 eine Schwimmkörperaufnahme vorgesehen, in welcher der Schwimmkörper 1 aufgenommen und mitgeführt werden kann. In der Schwimmkörperaufnahme wird der Schwimmkörper 1 in ein Einsatzgebiet verbracht. Im Einsatzgebiet angekommen, wird der Schwimmkörper 2 ausgebracht, so dass sich dieser von dem Unterwasserfahrzeug 2 entfernt und an die Wasseroberfläche W aufsteigt. Alternativ oder zusätzlich zu dem Schwimmkörper 1 kann das Unterwasserfahrzeug 1 einen Tauchkörper mitführen und ausbringen, der einen Schallsender 8 aufweist. Der Tauchkörper kann nach dem Ausbringen unterhalb der Wasseroberfläche W verbleiben.

Der Schallsender 8 des Schwimmkörpers 1 ist derart ausgestaltet, dass er beim Ausbringen aus dem Unterwasserfahrzeug nicht aktiv ist, d.h. der Schallsender 8 sendet keine Schallimpulse. Erst nach Ablauf einer vorgegebenen Zeitspanne nach dem Ausbringen oder bei der Erkennung des Auftauchens an die Wasseroberfläche W wird der Schallsender 8 aktiviert, so dass Schallimpulse erzeugt und ausgesendet werden. Auf diese Weise kann verhindert werden, dass aufgrund der vom Schallsender 8 abgestrahlten Schallimpulse eine Ortung des Unterwasserfahrzeugs 2 möglich ist.

Nach der Aktivierung des Schallsenders 8 können die von dem Schallsender 8 abgestrahlten Schallimpulse von dem Schallempfänger 9 des Unterwasserfahrzeugs 9 empfangen werden. Die von dem Schallsender 8 auf direktem Weg zu dem Schallempfänger gelangenden Schallimpulse sind in der Figur 1 durch einen Pfeil 6 dargestellt. Über diese Direktsignale kann auf Seiten des Schallempfängers 8 optional die Raumrichtung ermittelt werden, in welcher sich der Schwimmkörper 1 befindet.

Sofern sich im Umfeld des Schallsenders 8 ein weiteres Objekt 3 befindet, werden die von dem Schallsender 8 ausgesendeten Schallimpulse an dem Objekt 3 reflektiert und/oder gestreut und können von dem Schallempfänger 9 detektiert werden. Das Objekt 3 ist in der Figur 1 als Unterwasserfahrzeug dargestellt, während der örtliche Verlauf der Schallimpulse durch die Pfeile 4 und 5 angedeutet ist. Der Schallempfänger 9 ist richtungssensitiv ausgestaltet, so dass dieser die Empfangsrichtung ermitteln kann, also die Raumrichtung, aus welcher die empfangenen Schallimpulse stammen. Ferner kann auf Seiten des Schallempfängers 9 der Empfangszeitpunkt festgehalten werden und es kann ermittelt werden, an welcher Empfangsposition sich der Schallempfänger 9 beim Empfang des Schallimpulses befindet. Zur Ermittlung der Empfangsposition kann ein mit dem Schallempfänger 9 verbundenes Navigationssystem, beispielsweise ein Trägheitsnavigationssystem, an Bord des Unterwasserfahrzeugs 2 vorgesehen sein.

Um aus den von dem Objekt 3 reflektierten bzw. gestreuten Schallimpulsen Rückschlüsse auf die Position des Objekts 3 ziehen zu können, sind auf Seiten des Schallempfängers 9 weitere Informationen erforderlich. Daher ist ein mit dem Schallsender 8 verbundenes Navigationssystem 7 vorgesehen, welches als Satellitennavigationssystem ausgebildet ist. Über das Navigationssystem wird die Sendeposition, d.h. die absolute Position des Schallsenders 8 zum Sendezeitpunkt ermittelt. Ferner wird bei dem erfindungsgemäßen Verfahren der Sendezeitpunkt des Schallimpulses und die Sendeposition des Schallsenders 8 im Sendezeitpunkt in den Schallimpuls kodiert. Die in dem Schallimpuls enthaltenen Informationen werden durch das Wasser übertragen und können nach der Reflexion bzw. der Streuung des Schallimpulses an dem Objekt 3 in dem Schallempfänger 9 dekodiert werden. Somit kann auf eine zusätzliche Datenübertragung zwischen dem Schallsender 8 und dem Schallempfänger 9 verzichtet werden.

Zur Kodierung des Sendezeitpunkts und der Sendeposition in den Schallimpuls kann ein Frequenzspreizungsverfahren eingesetzt werden, wodurch die Dekodierung des Schallimpulses durch Dritte erschwert wird.

Anhand des Sendezeitpunkts und der Sendeposition des Schallimpulses kann der Schallempfänger 9 in Kombination mit dem Empfangszeitpunkt und der Empfangsrichtung die Position des Objekts 3 ermitteln. Die Positionsermittlung in bistatischen Sonarverfahren ist dem Fachmann hinlänglich bekannt und wird daher nicht im Detail beschrieben.

Bei dem Ortungsverfahren kann sich der Schallempfänger 9 gegenüber dem Schallsender 8 bewegen oder umgekehrt. Die Entfernung zwischen dem Schallsender 8 und dem Schallempfänger 9 sollte in einer ähnlichen Größenordnung wie der Abstand zwischen dem Schallsender 8 und dem Objekt 3 bzw. dem Abstand zwischen dem Objekt 3 zu dem Schallempfänger 9 sein.

Ein alternatives Ausführungsbeispiel des erfindungsgemäßen Verfahrens soll im Folgenden anhand der Darstellung in der **Figur 2** erläutert werden. Bei diesem Ausführungsbeispiel sind mehrere gegeneinander bewegte Schallsender 8 vorgesehen, welche mehrere Schallimpulse aussenden. Ein erster Schallsender 8 ist an Bord eines Schwimmkörpers 1 angeordnet, während ein zweiter Schallsender 8 an Bord eines Überwasserfahrzeugs 10 angeordnet ist. Beide Schallsender 8 senden simultan ungerichtete Schallimpulse ab, in welchen jeweils der Sendezeitpunkt und die Sendeposition kodiert sind. Die Schallimpulse treffen, wie durch die Pfeile 4 und 11 angedeutet, auf das zu ortende Objekt 3 und werden von dem Objekt 3 reflektiert.

Der Schallempfänger 9 empfängt sowohl die von dem ersten Schallsender 8 an dem Schwimmkörper 1 ausgesendeten Schallimpulse als auch die von dem zweiten Schallsender 8 an dem Überwasserfahrzeug 10 ausgesendeten Schallimpulse. Da in die Schallimpulse jeweils Informationen zu dem Sendezeitpunkt und der Sendeposition enthalten, können die empfangenen Schallimpulse jeweils einem der beiden Schallsender 8 zugeordnet werden. Aus den in den Schallimpulsen enthaltenen Informationen und dem vom Schallempfänger 9 ermittelten Empfangszeitpunkt, der Empfangsrichtung sowie der Empfangsposition wird dann die Position des zu ortenden Objekts 3 berechnet.

Bei den vorstehend beschriebenen Verfahren zur Ortung eines Objekts 3 unter Wasser, sendet ein Schallsender 8 einen Schallimpuls aus. Der Schallimpuls wird an dem zu ortenden Objekt 3 reflektiert und/oder gestreut und von einem örtlich von dem Schallsender 8 entfernten Schallempfänger 9 empfangen. Der Schallimpuls enthält kodierte Informationen zu dem Sendezeitpunkt des Schallimpulses und der Sendeposition des Schallsenders 8, welche von dem Schallempfänger 9 aus dem Schallimpuls dekodiert werden, um die Position des Objekts 3 zu ermitteln. Daher kann auf gesonderte Vorrichtungen zum Funkempfang auf Seiten des Schallempfängers sowie ein etwaiges Fahren auf Seerohrtiefe verzichtet werden, so dass sich die Detektierbarkeit des Schallempfängers 9 durch feindliche Einheiten verringert.

### Bezugszeichenliste

- 1: Schwimmkörper
- 2: Unterwasserfahrzeug
- 3: Objekt
- 4: Pfeil
- 5: Pfeil
- 6: Pfeil
- 7: Navigationssystem
- 8: Schallsender
- 9: Schallempfänger
- 10: Überwasserfahrzeug
- 11: Pfeil

- W: Wasseroberfläche

## Patentansprüche

1. Verfahren zur Ortung eines Objekts (3) unter Wasser, wobei ein Schallsender (8) einen Schallimpuls aussendet, der Schallimpuls an dem zu ortenden Objekt reflektiert wird und von einem örtlich von dem Schallsender (8) entfernten Schallempfänger (9) empfangen wird, **dadurch gekennzeichnet, dass** der Schallimpuls kodierte Informationen zu dem Sendezeitpunkt des Schallimpulses und der Sendeposition des Schallsenders (8) enthält, welche von dem Schallempfänger (9) aus dem reflektierten Schallimpuls dekodiert werden, um die Position des Objekts (3) zu ermitteln, wobei der Sendezeitpunkt des Schallimpulses und die Sendeposition des Schallsenders (8) im Sendezeitpunkt in dem einen Schallimpuls gemeinsam kodiert werden.

2. Verfahren nach Anspruch 1, wobei der Schallempfänger (9) den Empfangszeitpunkt des Schallsignals und die Empfangsrichtung ermittelt, aus welcher der Schallimpuls empfangen wird.

3. Verfahren nach Anspruch 1, wobei der Schallempfänger (9) anhand des Sendezeitpunkts, anhand der Sendeposition, anhand des Empfangszeitpunkts und anhand der Empfangsrichtung die Position des zu ortenden Objekts (3) ermittelt.

4. Verfahren nach einem der vorhergehenden Ansprüche, wobei der Schallsender (8) gegenüber dem Schallempfänger (9) bewegt wird.

5. Verfahren nach einem der vorhergehenden Ansprüche, wobei der Schallsender (8) an einem Wasserfahrzeug (10) oder einem unbemannten Tauch- oder Schwimmkörper (1) angeordnet ist.

6. Verfahren nach einem der vorhergehenden Ansprüche, der Schallempfänger (9) an einem Unterwasserfahrzeug (2) angeordnet ist.

7. Verfahren nach Anspruch 5, wobei der Schallsender (8) von dem Unterwasserfahrzeug (2) ausgebracht wird.

8. Verfahren nach einem der vorhergehenden Ansprüche, wobei die Sendeposition mittels eines Satellitennavigationssytems (7) und/oder mittels eines Trägheitsnavigationssystems ermittelt wird.

9. Verfahren nach einem der vorhergehenden Ansprüche, wobei mehrere Schallsender (8) mehrere Schallimpulse aussenden, die an dem zu ortenden Objekt (3) reflektiert werden und von dem Schallempfänger (9) empfangen werden.

10. Verfahren nach Anspruch 9, wobei die Schallsender (8) gegeneinander bewegt werden.

## Claims

1. A method for locating an object (3) underwater, wherein a sound transmitter (8) transmits a sound pulse, the sound pulse is reflected at the object to be located and is received by a sound receiver (9) spatially distant from the sound transmitter (8), **characterized in that**
the sound pulse contains encoded information relating to the time of transmission of the sound pulse and the transmission position of the sound transmitter (8), which is decoded by the sound receiver (9) from the reflected sound pulse, in order to determine the position of the object (3), wherein the time of transmission of the sound pulse and the transmission position of the sound transmitter (8) are encoded at the time of transmission together in the one sound pulse..

2. The method as claimed in claim 1, wherein the sound receiver (9) determines the reception time of the sound signal and the reception direction from which the sound pulse is received.

3. The method as claimed in claim 1, wherein the sound receiver (9) determines the position of the object (3) to be located with reference to the transmission time, with reference to the transmission position, with reference to the reception time and with reference to the reception direction.

4. The method as claimed in one of the previous claims, wherein the sound transmitter (8) moves with respect to the sound receiver (9).

5. The method as claimed in one of the previous claims, wherein the sound transmitter (8) is arranged at a water-going vessel (10) or an unmanned submersible or floating body (1).

6. The method as claimed in one of the previous claims, if the sound receiver (9) is arranged at an underwater vessel (2).

7. The method as claimed in claim 5, wherein the sound transmitter (8) is released by the underwater vessel (2).

8. The method as claimed in one of the previous claims, wherein the transmission position is determined by means of a satellite navigation system (7) and/or by means of an inertial navigation system.

9. The method as claimed in one of the previous claims, wherein a plurality of sound transmitters (8) transmit a plurality of sound pulses which are reflected at the object (3) to be located and are received by the sound receiver (9).

10. The method as claimed in claim 9, wherein the sound transmitters (8) move with respect to one another.

## Revendications

1. Procédé de localisation d'un objet (3) sous l'eau, dans lequel un émetteur sonore (8) émet une impulsion sonore, l'impulsion sonore est réfléchie sur l'objet à localiser et est reçue par un récepteur sonore (9) spatialement éloigné de l'émetteur sonore (8), **caractérisé en ce que**
l'impulsion sonore contient des informations codées relatives au moment de la transmission de l'impulsion sonore et à la position de transmission de l'émetteur sonore (8), qui sont décodées par le récepteur sonore (9) à partir de l'impulsion sonore réfléchie, afin de déterminer la position de l'objet (3), le moment de la transmission de l'impulsion sonore et la position de transmission de l'émetteur sonore (8) étant codés ensemble au moment de la transmission dans l'impulsion sonore unique.

2. Procédé selon la revendication 1, dans lequel le récepteur de son (9) détermine l'heure de réception du signal sonore et la direction de réception à partir de laquelle l'impulsion sonore est reçue.

3. Procédé selon la revendication 1, dans lequel le récepteur de son (9) détermine la position de l'objet (3) à localiser par rapport au temps d'émission, par rapport à la position d'émission, par rapport au temps de réception et par rapport à la direction de réception.

4. Procédé selon l'une des revendications précédentes, dans lequel l'émetteur de son (8) se déplace par rapport au récepteur de son (9).

5. Procédé selon l'une des revendications précédentes, dans lequel l'émetteur de son (8) est placé sur un bateau (10) ou un submersible ou un corps flottant sans équipage (1).

6. Procédé selon l'une des revendications précédentes, dans lequel le récepteur de son (9) est placé sur un navire sous-marin (2).

7. Procédé selon la revendication 5, dans lequel l'émetteur sonore (8) est libéré par le navire sous-marin (2).

8. Procédé selon l'une des revendications précédentes, dans lequel la position d'émission est déterminée au moyen d'un système de navigation par satellite (7) et/ou d'un système de navigation inertielle.

9. Procédé selon l'une des revendications précédentes, dans lequel plusieurs émetteurs sonores (8) transmettent plusieurs impulsions sonores qui sont réfléchies sur l'objet (3) à localiser et reçues par le récepteur sonore (9).

10. Procédé selon la revendication 9, dans laquelle les émetteurs sonores (8) se déplacent les uns par rapport aux autres.
